# EUROPEAN PATENT SPECIFICATION

(11) **EP 3 725 648 B1**
(45) Date of publication and mention of the grant of the patent: **07.02.2024**
(21) Application number: 18889526.2
(22) Date of filing: 07.12.2018
(51) Int. Cl.: B62D 25/18, B62D 25/02, B62D 25/16, B62D 27/02, B62D 29/00, B62D 25/08

(54) **REAR WHEEL COVER ASSEMBLY, WHEEL COVER STIFFENER, VEHICLE BODY ASSEMBLY, AND AUTOMOBILE**
HINTERRADVERKLEIDUNGSANORDNUNG, RADVERKLEIDUNGSVERSTEIFUNG, FAHRZEUGKAROSSERIEANORDNUNG UND KRAFTFAHRZEUG
ENSEMBLE ENJOLIVEUR DE ROUE ARRIÈRE, RAIDISSEUR D'ENJOLIVEUR DE ROUE, ENSEMBLE CARROSSERIE DE VÉHICULE, ET VÉHICULE AUTOMOBILE

(30) Priority: 13.12.2017 CN 201711327441
(43) Date of publication of application: 21.10.2020
(73) Proprietor: NIO (Anhui) Holding Co., Ltd, Hefei City, Anhui Province (CN)
(72) Inventor: SHEN, Xuekai, Hong Kong (CN); CHENG, Ming, Hong Kong (CN); YANG, Chuanyi, Hong Kong (CN); LI, Shuo, Hong Kong (CN); JING, Haitao, Hong Kong (CN); ZHENG, Wang, Hong Kong (CN); QIN, Le, Hong Kong (CN)
(74) Representative: SSM Sandmair
(86) International application number: PCT/CN2018/119889
(87) International publication number: WO 2019/114634

(56) References cited:
- EP-A1- 1 479 596
- CN-U- 205 469 321
- CN-U- 205 523 514
- CN-U- 205 891 005
- CN-U- 206 501 905
- CN-U- 208 053 458
- JP-A- 2017 094 772
- JP-U- H0 586 758
- KR-B1- 100 844 723

## Description

### Technical Field

The invention relates to the field of vehicle bodies in white, and in particular to a rear wheel arch assembly, a vehicle body assembly comprising such a rear wheel arch assembly, and a vehicle.

### Background Art

In the past, a rear wheel arch main body is made of a steel stamped member, and a stiffener made of a stamped member is provided near shock absorber mounting points of the rear wheel arch main body to stiffen the mounting points. A plurality of nuts are connected to the rear wheel arch main body or a stiffening plate by means of a heat connection such as projection welding at the shock absorber mounting points.

With the requirements for lightweight of vehicle bodies, aluminium alloy vehicle bodies gradually replace the traditional steel vehicle bodies. As for the aluminium alloy rear wheel arch, stable shock absorber mounting points also need to be provided. However, if heat processing such as welding is conducted on a rear wheel arch made of an aluminium alloy material, a heat-affected zone will be left, and various failures may occur at the heat-affected zone.

JP H0586758 U provides a rear vehicle body structure of a vehicle. The rear vehicle body structure includes a wheel house inner part covering an upper portion of a rear wheel form the inside in the vehicle width direction, a wheel house inner part connected to an outer end of the wheel house inner part in the vehicle width direction, a side panel extending upward and a floor panel connected to a lower portion of the wheel house inner part and extending inward in the vehicle width direction.

### Summary of the Invention

The invention for which protection is sought is defined by the independent claim. The dependent claims concern particular embodiments.

An object of the invention is to solve or at least alleviate the problems existing in the prior art.

According to some of the features, an object of the invention is to provide a rear wheel arch assembly having stable shock absorber mounting points.

According to some of the features, an object of the invention is to provide a rear wheel arch main body and a stiffening plate in a purely mechanical connection without heat connection therebetween.

According to some of the features, the invention provides a rear wheel arch assembly that is easy to assemble.

In an aspect, a rear wheel arch assembly is provided, comprising:
a rear wheel arch main body, the rear wheel arch main body defining a contour matching a rear wheel; and
a second stiffener attached to a second side, close to a vehicle body, of the rear wheel arch main body, the second stiffener being constituted by a die cast member,
wherein the second stiffener is provided with a plurality of apertures, and a plurality of nuts are attached to the second stiffener at the positions of the plurality of apertures to provide shock absorber mounting points.

Optionally, a first stiffener is attached to a first side, close to the outside of the of the rear wheel arch main body; wherein the wheel arch main body and the first stiffener are provided with a plurality of apertures, and the plurality of apertures in the rear wheel arch main body, the first stiffener, and the second stiffener are positioned corresponding to one another.

Optionally, in the rear wheel arch assembly described above, the plurality of nuts are connected to the second stiffener in a press-riveting manner.

Optionally, in the rear wheel arch assembly described above, the plurality of nuts are connected to the second side of the second stiffener in a press-riveting manner.

Optionally, in the rear wheel arch assembly described above, the rear wheel arch main body and the first stiffening plate are constituted by stamped members.

Optionally, in the rear wheel arch assembly described above, the first stiffener is connected to the rear wheel arch main body in a self-piercing riveting manner, and/or the second stiffener is connected to the rear wheel arch main body in a self-piercing riveting manner.

Optionally, in the rear wheel arch assembly described above, self-piercing rivets are arranged at intervals of 50-80 mm between the first stiffener and the rear wheel arch main body and/or between the second stiffener and the rear wheel arch main body.

Optionally, in the rear wheel arch assembly described above, the first stiffener and the rear wheel arch main body and/or the second stiffener and the rear wheel arch main body are also reinforced therebetween with a high-strength structural adhesive.

Optionally, in the rear wheel arch assembly described above, the first stiffener, the second stiffener and the rear wheel arch main body are respectively provided with a bent stiffening portion, and the plurality of apertures positioned corresponding to one another in the rear wheel arch main body, the first stiffener and the second stiffener are symmetrically and uniformly distributed on two sides of the bent stiffening portions.

Optionally, in the rear wheel arch assembly described above, the bent stiffening portion of the second stiffener is provided with a plurality of parallel stiffening ribs.

Optionally, in the rear wheel arch assembly described above, the first stiffener and the rear wheel arch main body are made of an aluminium alloy or steel, and the second stiffener is made of an aluminium alloy.

In another aspect, a vehicle body assembly is provided, comprising a rear wheel arch assembly according to various embodiments.

In another aspect, a vehicle is provided, comprising a vehicle body assembly according to various embodiments.

The rear wheel arch assembly according to the invention provides stable shock absorber mounting points, and has the characteristics such as lightweight.

In addition, the rear wheel arch assembly of the invention uses a purely mechanical connection, thereby avoiding generating a heat-affected zone and related problems.

### Brief Description of the Drawing

The disclosure of the invention will become more readily understood with reference to the accompanying drawing. Those skilled in the art will readily appreciate that the accompanying drawing is merely for illustrative purposes and is not intended to limit the scope of protection of the invention. In addition, like components are indicated by like numbers in the figure, in which:

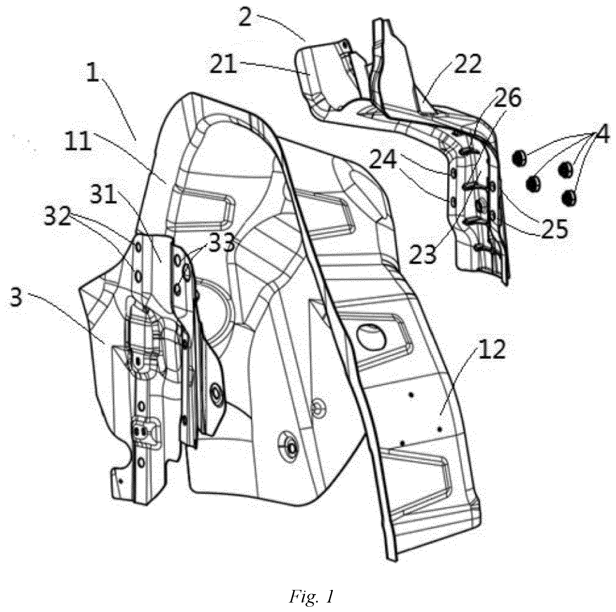

Fig. 1 shows an exploded view of a rear wheel arch assembly according to an embodiment.

### Detailed Description of Embodiments

It can be readily understood that according to the technical solution of the invention, a person of ordinary skill in the art may propose multiple interchangeable structures and implementations without departing from the scope of the invention as defined by the appended claims. Therefore, the following specific implementations and the accompanying drawing are merely exemplary descriptions of the technical solution of the invention, and should not be construed as the entirety of the invention or construed as restricting or limiting the technical solution of the invention.

Orientation terms, such as up, down, left, right, front, rear, front side, back side, top, and bottom, which are or may be mentioned in this description, are defined with respect to the structures shown in the accompanying drawing, and are relative concepts, and therefore may correspondingly vary depending on different positions and different conditions in use. Therefore, these or other orientation terms should not be construed as restrictive terms as well.

Referring to Fig. 1, an exploded view of a rear wheel arch assembly according to the invention is shown. The rear wheel arch assembly is a part of a vehicle body in white of a vehicle, and is generally connected to a rear longitudinal beam. In addition, the rear wheel arch assembly is also connected to a vehicle chassis via a shock absorber. Since the vehicle chassis bumps when the vehicle is running, the rear wheel arch assembly needs to provide stable shock absorber mounting points so as to provide stable supports for the whole vehicle body in white.

In this embodiment, the rear wheel arch assembly comprises a rear wheel arch main body 1. The rear wheel arch main body 1 defines a contour matching a rear wheel. The rear wheel arch main body 1 comprises a first side 11 close to the outside, and a second side 12 close to the vehicle body. After the vehicle body in white is assembled with the chassis, the wheel arch main body 1 will cover the rear wheel. The rear wheel arch assembly further comprises a first stiffener 3 attached to the first side 11 of the rear wheel arch main body 1, and a second stiffener 2 attached to the second side 12 of the rear wheel arch main body 1. The rear wheel arch main body 11, the first stiffener 3 and the second stiffener 2 are all provided with a plurality of apertures positioned corresponding to one another, wherein the first stiffener is provided with first stiffener apertures 32, 33, and the second stiffener is provided with second stiffener apertures 24, 25. Although the apertures of the rear wheel arch main body 1 are blocked and are thus invisible, it is conceivable that the apertures of the rear wheel arch main body 1 are aligned to the first stiffener apertures 32, 33 of the first stiffener 3 attached thereto. It should be understood that when the rear wheel arch main body 11, the first stiffener 3 and the second stiffener 2 are assembled together, the apertures positioned corresponding to one another in the rear wheel arch main body 11, the first stiffener 3 and the second stiffener 2 are aligned, and a plurality of nuts are attached to the second stiffener 2 at the positions of the second stiffener apertures 24, 25, thereby defining stiffened shock absorber mounting points. In order to improve the strength of the shock absorber mounting points, in an embodiment of the invention, the second stiffener 2 is constituted by a die cast member instead of a stamped member.

In some embodiments, the plurality of nuts 4 are connected to the second stiffener 2 in a press-riveting manner. In some embodiments, the second stiffener 2 is provided with a first side 21 close to the outside, and a second side 22 close to the vehicle body, and the plurality of nuts 4 are connected to the second side 22 of the second stiffener in a press-riveting manner. In some embodiments, the second stiffener 2 may be provided with a bent stiffening portion 23, and the bent stiffening portion 23 may be produced in a die casting process. In some embodiments, the bent stiffening portion 23 is formed as a protrusion in the direction of the vehicle body, and a plurality of parallel stiffening ribs 26 are formed in a recessed portion of a first side of the bent stiffening portion. In some embodiments, the apertures in the second stiffener 2 are distributed on two sides of the bent stiffening portion 26, for example, symmetrically and uniformly distributed on the two sides of the bent stiffening portion 26. As shown, two first-side apertures 24 and two second-side apertures 25 are respectively distributed on the two sides of the bent stiffening portion 26, and four nuts 4 are respectively connected to the apertures in a press-riveting manner. In alternative embodiments, other suitable numbers of apertures and nuts can be selected, and intervals between the apertures can also be changed. In some embodiments, the second stiffener 2 may be made of an aluminium alloy material, for example, the second stiffener 2 may be made of an aluminium alloy material by means of die casting.

In some embodiments, the rear wheel arch main body 1 may be constituted by a stamped member such as an aluminium alloy or steel stamped member. In some embodiments, the first stiffening plate 3 may also be constituted by a stamped member such as an aluminium alloy or steel stamped member. In some embodiments, the first stiffener 3 and the rear wheel arch main body 1 are also respectively provided with a bent stiffening portion. The bent stiffening portion of the rear wheel arch main body 1 is blocked by the bent stiffening portion 31 of the first stiffener 3 and is thus invisible, and the bent stiffening portions of the rear wheel arch main body 1 and the first stiffener 3 may also be protrusions in the direction of the vehicle body. The apertures in the first stiffener 3 and the rear wheel arch main body 1 are also correspondingly distributed on two sides of the bent stiffening portions, for example, symmetrically and uniformly distributed on the two sides of the bent stiffening portions.

In some embodiments, the first stiffener 3 may be connected to the rear wheel arch main body 1 in a self-piercing riveting manner. The number and positions of the riveting points can be determined depending on a lap-joint area between the rear wheel arch main body 1 and the first stiffener 3. In some embodiments, self-piercing rivets between the first stiffener 3 and the rear wheel arch main body 1 may be arranged at intervals of 50-80 mm. In some embodiments, the second stiffener 2 may also be connected to the rear wheel arch main body 1 in a self-piercing riveting manner, and riveting points between the second stiffener 2 and the rear wheel arch main body 1 may be offset from riveting points between the first stiffener 3 and the rear wheel arch main body 1. In some embodiments, self-piercing rivets between the second stiffener 2 and the rear wheel arch main body 1 may also be arranged at intervals of 50-80 mm. In some embodiments, the first stiffener 3 and the rear wheel arch main body 1 and/or the second stiffener 2 and the rear wheel arch main body 1 may be reinforced therebetween with a high-strength structural adhesive in addition to the self-piercing riveting.

In another aspect, the invention also aims to set forth a second stiffener 2 which can also be called as a wheel arch stiffener. The wheel arch stiffener is attached to a side, close to a vehicle body, of a rear wheel arch main body, the wheel arch stiffener is constituted by a die cast member and especially by an aluminium die cast member, the wheel arch stiffener is provided with a plurality of apertures, and a plurality of nuts are attached to the wheel arch stiffener at the positions of the plurality of apertures to provide shock absorber mounting points.

Optionally, in the wheel arch stiffener described above, the plurality of nuts are connected to a side, close to the vehicle body, of the wheel arch stiffener in a press-riveting manner.

Optionally, in the wheel arch stiffener described above, the wheel arch stiffener is provided with a bent stiffening portion, and the plurality of apertures are symmetrically and uniformly distributed on two sides of the bent stiffening portion.

In another aspect, the invention also aims to set forth a vehicle body assembly comprising the rear wheel arch assembly of the above embodiments, and a vehicle.

The rear wheel arch assembly according to the invention provides stable shock absorber mounting points. In addition, by means of a purely mechanical connection, the rear wheel arch assembly does not have a heat-affected zone and is easy to assemble.

The particular embodiments described above are intended merely to more clearly describe the principles of the invention, in which each component is clearly shown or described in order to facilitate a better understanding of the principles of the invention. Various modifications or variations of the invention could be readily made by those skilled in the art without departing from the scope of the invention. It should therefore be understood that such modifications or variations are intended to be included within the scope of protection of the invention, as defined by the appended claims.

## Claims

1. A rear wheel arch assembly, **characterized by** comprising:
a rear wheel arch main body (1), the rear wheel arch main body (1) defining a contour matching a rear wheel; and
a second stiffener (2), **characterized in that** the second stiffener (2) is attached to a second side, close to a vehicle body, of the rear wheel arch main body (1), the second stiffener (2) is constituted by a die cast member, the second stiffener (2) is provided with a plurality of apertures (24, 25), and a plurality of nuts (4) are attached to the second stiffener (2) at the positions of the plurality of apertures (24, 25) to provide shock absorber mounting points.

2. The rear wheel arch assembly according to claim 1, further comprises:
a first stiffener (3) attached to a first side, close to the outside, of the rear wheel arch main body (1); and
wherein the rear wheel arch main body (1) and the first stiffener (3) are provided with a plurality of apertures (32, 33), and the plurality of apertures in the rear wheel arch main body (1) , the first stiffener (3) and the second stiffener (2) are positioned corresponding to one another.

3. The rear wheel arch assembly according to claim 2, **characterized in that** the plurality of nuts (4) are connected to the second side of the second stiffener (2) in a press-riveting manner.

4. The rear wheel arch assembly according to claim 2 or 3, **characterized in that** the rear wheel arch main body (1) and the first stiffening plate (3) are constituted by stamped members.

5. The rear wheel arch assembly according to claim 2 or 3, **characterized in that** the first stiffener (3) is connected to the rear wheel arch main body (1) in a self-piercing riveting manner, and/or the second stiffener (2) is connected to the rear wheel arch main body (1) in a self-piercing riveting manner.

6. The rear wheel arch assembly according to claim 5, **characterized in that** self-piercing rivets are arranged at intervals of 50-80 mm between the first stiffener (3) and the rear wheel arch main body (1) and/or between the second stiffener (2) and the rear wheel arch main body (1).

7. The rear wheel arch assembly according to claim 5, **characterized in that** the first stiffener (3) and the rear wheel arch main body (1) and/or the second stiffener (2) and the rear wheel arch main body (1) are also reinforced therebetween with a high-strength structural adhesive.

8. The rear wheel arch assembly according to claim 2, **characterized in that** the first stiffener (3), the second stiffener (2) and the rear wheel arch main body (1) are respectively provided with a bent stiffening portion, and the plurality of apertures positioned corresponding to one another in the rear wheel arch main body (1), the first stiffener (3) and the second stiffener (2) are symmetrically and uniformly distributed on two sides of the bent stiffening portions.

9. The rear wheel arch assembly according to claim 8, **characterized in that** the bent stiffening portion of the second stiffener (2) is provided with a plurality of parallel stiffening ribs (26).

10. The rear wheel arch assembly according to any one of claim 1 to 9, **characterized in that** the first stiffener (3) and the rear wheel arch main body (1) are made of an aluminium alloy or steel, and the second stiffener (2) is made of an aluminium alloy.

11. A vehicle body assembly, **characterized by** comprising a rear wheel arch assembly according to any one of claim 1 to 10.

12. A vehicle, **characterized by** comprising a vehicle body assembly according to claim 11.

## Patentansprüche

1. Hinterradhausanordnung, **dadurch gekennzeichnet, dass** sie Folgendes umfasst:
einen Hinterradhaushauptkörper (1), wobei der Hinterradhaushauptkörper (1) eine Kontur definiert, die zu einem Hinterrad passt; und
eine zweite Versteifung (2), **dadurch gekennzeichnet, dass** die zweite Versteifung (2) an einer zweiten Seite, nahe einer Fahrzeugkarosserie, des Hinterradhaushauptkörpers (1) befestigt ist, wobei die zweite Versteifung (2) durch ein Druckgusselement gebildet wird, wobei die zweite Versteifung (2) mit mehreren Öffnungen (24, 25) versehen ist und wobei mehrere Muttern (4) an der zweiten Versteifung (2) an den Positionen der mehreren Öffnungen (24, 25) befestigt sind, um Stoßdämpferbefestigungspunkte bereitzustellen.

2. Hinterradhausanordnung nach Anspruch 1, die ferner Folgendes umfasst:
eine erste Versteifung (3), befestigt an einer ersten Seite, nahe der Außenseite, des Hinterradhaushauptkörpers (1); und
wobei der Hinterradhaushauptkörper (1) und die erste Versteifung (3) mit mehreren Öffnungen (32, 33) versehen sind und wobei die mehreren Öffnungen im Hinterradhaushauptkörper (1), die erste Versteifung (3) und die zweite Versteifung (2) einander entsprechend positioniert sind.

3. Hinterradhausanordnung nach Anspruch 2, **dadurch gekennzeichnet, dass** die mehreren Muttern (4) mit der zweiten Seite der zweiten Versteifung (2) in einer Pressnietweise verbunden sind.

4. Hinterradhausanordnung nach Anspruch 2 oder 3, **dadurch gekennzeichnet, dass** der Hinterradhaushauptkörper (1) und die erste Versteifungsplatte (3) aus gestanzten Elementen gebildet sind.

5. Hinterradhausanordnung nach Anspruch 2 oder 3, **dadurch gekennzeichnet, dass** die erste Versteifung (3) in einer Stanznietweise mit dem Hinterradhaushauptkörper (1) verbunden ist und/oder die zweite Versteifung (2) in einer Stanznietweise mit dem Hinterradhaushauptkörper (1) verbunden ist.

6. Hinterradhausanordnung nach Anspruch 5, **dadurch gekennzeichnet, dass** Stanznieten in Intervallen von 50-80 mm zwischen der ersten Versteifung (3) und dem Hinterradhaushauptkörper (1) und/oder zwischen der zweiten Versteifung (2) und dem Hinterradhaushauptkörper (1) angeordnet sind.

7. Hinterradhausanordnung nach Anspruch 5, **dadurch gekennzeichnet, dass** die erste Versteifung (3) und der Hinterradhaushauptkörper (1) und/oder die zweite Versteifung (2) und der Hinterradhaushauptkörper (1) dazwischen auch mit einem hochfesten Strukturklebstoff verstärkt sind.

8. Hinterradhausanordnung nach Anspruch 2, **dadurch gekennzeichnet, dass** die erste Versteifung (3), die zweite Versteifung (2) und der Hinterradhaushauptkörper (1) jeweils mit einem gebogenen Versteifungsteil versehen sind, und wobei die mehreren Öffnungen, die einander entsprechend im Hinterradhaushauptkörper (1) positioniert sind, die erste Versteifung (3) und die zweite Versteifung (2) symmetrisch und gleichförmig auf zwei Seiten der gebogenen Versteifungsteile verteilt sind.

9. Hinterradhausanordnung nach Anspruch 8, **dadurch gekennzeichnet, dass** der gebogene Versteifungsteil der zweiten Versteifung (2) mit mehreren parallelen Versteifungsrippen (26) versehen ist.

10. Hinterradhausanordnung nach einem der Ansprüche 1 bis 9, **dadurch gekennzeichnet, dass** die erste Versteifung (3) und der Hinterradhaushauptkörper (1) aus einer Aluminiumlegierung oder Stahl gefertigt sind und die zweite Versteifung (2) aus einer Aluminiumlegierung gefertigt ist.

11. Fahrzeugkarosserieanordnung, **dadurch gekennzeichnet, dass** sie eine Hinterradhausanordnung nach einem der Ansprüche 1 bis 10 umfasst.

12. Fahrzeug, **dadurch gekennzeichnet, dass** es eine Fahrzeugkarosserieanordnung nach Anspruch 11 umfasst.

## Revendications

1. Ensemble passage de roue arrière, **caractérisé en ce qu'**il comprend :
une carrosserie principale de passage de roue arrière (1), la carrosserie principale de passage de roue arrière (1) définissant un contour apparié à une roue arrière ; et
un deuxième raidisseur (2), **caractérisé en ce que** le deuxième raidisseur (2) est attaché à un deuxième côté, à proximité d'une carrosserie de véhicule, de la carrosserie principale de passage de roue arrière (1), le deuxième raidisseur (2) est constitué d'un élément coulé sous pression, le deuxième raidisseur (2) est pourvu d'une pluralité d'ouvertures (24, 25), et une pluralité d'écrous (4) sont attachés au deuxième raidisseur (2) au niveau des positions de la pluralité d'ouvertures (24, 25) pour fournir des points de montage d'amortisseur.

2. Ensemble passage de roue arrière selon la revendication 1, comprenant en outre :
un premier raidisseur (3) attaché à un premier côté, proche de l'extérieur, de la carrosserie principale de passage de roue arrière (1) ; et
la carrosserie principale de passage de roue arrière (1) et le premier raidisseur (3) étant pourvus d'une pluralité d'ouvertures (32, 33), et la pluralité d'ouvertures dans la carrosserie principale de passage de roue arrière (1), le premier raidisseur (3) et le deuxième raidisseur (2) étant positionnés de façon à correspondre l'un à l'autre.

3. Ensemble passage de roue arrière selon la revendication 2, **caractérisé en ce que** la pluralité d'écrous (4) sont raccordés au deuxième côté du deuxième raidisseur (2) par rivetage à la presse.

4. Ensemble passage de roue arrière selon la revendication 2 ou la revendication 3, **caractérisé en ce que** la carrosserie principale de passage de roue arrière (1) et la première plaque de raidissement (3) sont constituées d'éléments estampés.

5. Ensemble passage de roue arrière selon la revendication 2 ou la revendication 3, **caractérisé en ce que** le premier raidisseur (3) est raccordé à la carrosserie principale de passage de roue arrière (1) par rivetage auto-perceur, et/ou le deuxième raidisseur (2) est raccordé à la carrosserie principale de passage de roue arrière (1) par rivetage auto-perceur.

6. Ensemble passage de roue arrière selon la revendication 5, **caractérisé en ce que** des rivets auto-perforants sont agencés à des intervalles de 50 à 80 mm entre le premier raidisseur (3) et la carrosserie principale de passage de roue arrière (1) et/ou entre le deuxième raidisseur (2) et la carrosserie principale de passage de roue arrière (1).

7. Ensemble passage de roue arrière selon la revendication 5, **caractérisé en ce que** le premier raidisseur (3) et la carrosserie principale de passage de roue arrière (1) et/ou le deuxième raidisseur (2) et la carrosserie principale de passage de roue arrière (1) sont également renforcés entre eux avec un adhésif structural à haute résistance.

8. Ensemble passage de roue arrière selon la revendication 2, **caractérisé en ce que** le premier raidisseur (3), le deuxième raidisseur (2) et la carrosserie principale de passage de roue arrière (1) sont respectivement pourvus d'une portion de raidissement courbée, et la pluralité d'ouvertures positionnées de façon à correspondre les unes aux autres dans la carrosserie principale de passage de roue arrière (1), le premier raidisseur (3) et le deuxième raidisseur (2) sont répartis symétriquement et uniformément sur deux côtés des portions de raidissement courbées.

9. Ensemble passage de roue arrière selon la revendication 8, **caractérisé en ce que** la portion de raidissement courbée du deuxième raidisseur (2) est pourvue d'une pluralité de nervures de raidissement parallèles (26).

10. Ensemble passage de roue arrière selon l'une quelconque des revendications 1 à 9, **caractérisé en ce que** le premier raidisseur (3) et la carrosserie principale de passage de roue arrière (1) sont constitués d'un alliage d'aluminium ou d'acier, et le deuxième raidisseur (2) est constitué d'un alliage d'aluminium.

11. Ensemble carrosserie de véhicule, **caractérisé en ce qu'**il comprend un ensemble passage de roue arrière selon l'une quelconque des revendications 1 à 10.

12. Véhicule, **caractérisé en ce qu'**il comprend un ensemble carrosserie de véhicule selon la revendication 11.
